# EUROPÄISCHE PATENTANMELDUNG

(11) **EP 1 829 745 A2**
(43) Veröffentlichungstag der Anmeldung: **05.09.2007**
(21) Anmeldenummer: 06024266.6
(22) Anmeldetag: 23.11.2006
(51) Int. Cl.: B60R 5/00

(54) **Deckensystem für Großraumfahrzeuge oder -flugzeuge**

(30) Priorität: 02.03.2006 DE 102006009629
(71) Anmelder: Happich Interiors GmbH, 42279 Wuppertal (DE); Ellamp Interiors SPA, 21020 Bodio Lomnago VA (IT)
(72) Erfinder: Ottino, Massimo, 21100 Varese (IT); Boin, Gionata, 28921 Verbania (VB) (IT); Diehl, Christian, 42551 Velbert (DE); Sauter, Hans Jürgen, 40822 Mettmann (DE)

(57) **Zusammenfassung**

Die Erfindung bezieht sich auf ein Deckensystem (10) für Großraumfahrzeuge oder -flugzeuge, wie z. B. für Reisebusse, Schienenfahrzeuge, Passagierflügzeuge etc. mit im Deckenbereich (11) im Wesentlichen im Bereich oberhalb der Sitzplätze (12) angeordnetem Luftleit- und Deckenverkleidungssystem (13) und ebenfalls in diesem Bereich angeordneten, für die Fahrgäste (14) vom Fahrzeuginnenraum her zugänglichen Gepäckablagefächern (15). Es ist dabei erfindungsgemäß vorgesehen, dass das Luftleit- und Deckenverkleidungssystem (13) wenigstens einen im Wesentlichen in Fahrzeuglängsrichtung sich erstreckenden, modulartig aufgebauten Luftkanal (16) mit im Wesentlichen gerade verlaufendem Querschnitt und mit Mitteln (17) zur Anbringung der Gepäckablagefächer (15) umfasst, und dass die Gepäckablagefächer (15) als an dem Luftkanal (16) modulartig anbringbare, sich in Normalposition in Fahrzeugquerrichtung erstreckende und von den Sitzplätzen (12) selbst her zugänglichen Gepäckablageboxen (18) bestehen.

## Beschreibung

Die Erfindung bezieht sich auf ein Deckensystem für Großraumfahrzeuge oder -flugzeuge, wie z. B. für Reisebusse, Schienenfahrzeuge, Passagierflugzeuge etc. mit im Deckenbereich im Wesentlichen im Bereich oberhalb der Sitzplätze angeordnetem Luftleit- und Deckenverkleidungssystem und ebenfalls in diesem Bereich angeordneten, für die Fahrgäste vom Fahrzeuginnenraum her zugänglichen Gepäckablagefächern.

Es sind aus dem Stand der Technik bzw. aus der Praxis eine Vielzahl von derartigen Deckensystemen für Großraumfahrzeuge oder -flugzeuge bekannt. Es weisen die bekannten Deckensysteme mehrere Nachteile auf, die sich insbesondere dadurch ergeben, dass die Zugänglichkeit des Gepäckraums von der Gangmitte her erfolgt, so dass es beim Be- und Entladen des Gepäckraums von der Gangmitte aus unvermeidlich zu einer Staubildung durch die in der Gangmitte befindlichen Personen kommt. Weiterhin nachteilig ist bei den bekannten Deckensystemen, dass durch die Anbringung der Luftkanäle im Übergangsbereich vom Fahrzeugdach zu den Seitenwänden hin durch die Verwendung von mehr oder weniger massiven Stützelementen es hier durch diese Stützelemente zu Strömungsunterbrechungen kommt, so dass in diesem Bereich Turbulenzen innerhalb des Luftkanals entstehen, wodurch zum Teil eine erhebliche Geräuschbelästigung entstehen kann. Weiterhin nachteilig sind bei den bekannten Deckensystemen die unveränderlich beispielsweise eingefrästen Service-Sets in diesen Deckensystemen, so dass eine Anpassung an unterschiedliche Einbausituationen hier nicht möglich ist und es liegt eine weitestgehende Festlegung auf eine Ausstattungsvariante vor. Bzgl. der aus dem Stand der Technik bekannten Deckensysteme in diesem Fall für Großraumfahrzeuge wird beispielhaft auf die EP 1 136 319 A2 verwiesen:

Es bezieht sich diese Druckschrift auf ein Deckensystem für Großraumfahrzeuge, insbesondere Reisebusse, mit im Übergangsbereich vom Fahrzeugdach zu den Fahrzeugseitenwänden angeordneten, vom Mittelgang des Fahrzeugs her zugänglichen Gepäckablagefächern und Klappen zum Verschließen dieser Gepäckablagefächer. Es ist dabei vorgesehen, dass die Böden der Gepäckablagefächer ebenso wie die Klappen integrierte Bestandteile des am Fahrzeugdach zu befestigenden Deckensystems sind, dass sich die Klappen in Ihrer Schließlage mit jeweils einer ihrer Längskanten, etwa auf einer Ebene mit den Böden liegend an diese anschließen, und dass die Klappen zum Öffnen jeweils nach oben um die Klappachsen klappbar sind, die im Bereich ihrer den Gepäckablagen abgewandten bzw. der Fahrzeuglängsmitte benachbarten Längskanten angeordnet sind. Mit einem derart ausgebildeten Deckensystem soll insbesondere erreicht werden, dass eine einfache Klappenbedienung auch bei äußerst engen Platzverhältnissen ermöglicht wird und sich darüber hinaus eine Materialersparnis und ein gefälliges Aussehen ergeben soll. Es weist jedoch ein derart ausgebildetes Deckensystem typischerweise die oben beschriebenen Nachteile der bekannten Systeme auf.

Ausgehend von diesen bekannten Deckensystemen für Großraumfahrzeuge oder -flugzeuge liegt der Erfindung die Aufgabe zu Grunde, die bekannten Anordnungen unter Beibehaltung der bisherigen Vorteile in der Weise zu verbessern bzw. weiter zu entwickeln, dass die zuvor genannten Nachteile der bekannten Ausführungsformen vermieden werden, wobei insbesondere die Zugänglichmachung des Gepäckraums vereinfacht und damit der Komfort und die Sicherheit des Fahrgasts erhöht werden soll. Die gewünschte Anordnung soll weiterhin eine gegenüber den bekannten Ausführungsformen verbesserte Führung des Luftstroms im Luftkanal aufweisen sowie verbesserte Möglichkeiten hinsichtlich einer Anpassung dieses Deckensystems in Bezug auf unterschiedliche Einbausituationen, wie z. B. variable, ggf. austauschbare Ausstattungsmöglichkeiten von Economik bis 1. Klasse in einem Reisebus. Die gewünschte Anordnung soll dabei insbesondere auch einfach im Aufbau sein und soll einfach und möglichst flexibel in dem betreffenden Fahrzeug angebracht werden können.

Die Aufgabe wird erfindungsgemäß dadurch gelöst, dass das Luftleit- und Deckenverkleidungssystem wenigstens einen im Wesentlichen in Fahrzeuglängsrichtung sich erstreckenden, modulartig aufgebauten Luftkanal mit einem im Wesentlichen gerade verlaufenden Querschnitt und mit Mitteln zur Anbringung der Gepäckablagefächer umfasst, und dass die Gepäckablagefächer als an dem Luftkanal modulartig anbringbare, sich in Normalposition in Fahrzeugquerrichtung erstreckende und von den Sitzplätzen selbst her zugängliche Gepäckablageboxen bestehen. Auf diese Weise wird erstmalig mit einfachen Mitteln ein Deckensystem geschaffen, bei dem insbesondere die Zugänglichkeit des Gepäckraums vereinfacht und dadurch der Komfort und die Sicherheit für den Fahrgast erhöht wird, eben dadurch, dass durch die von den Sitzplätzen selbst her zugänglichen Gepäckablageboxen die Fahrgäste nicht mehr gestört werden, wenn jemand aufsteht und etwas aus der Gepäckablagebox holen oder hinein legen möchte. Es wird dadurch das Ein- und Aussteigen insgesamt erleichtert und beschleunigt, da der Fahrgast sein Gepäck nicht mehr von der Gangmitte her be- und entlädt und es hierdurch zur Staubildung kommt (verbesserter Fahrgastfluss). Im Weiteren kommt es durch den gerade verlaufenden Querschnitt des Luftkanals zu keinen Strömungsunterbrechungen und dadurch entstehende Turbulenzen mehr im Luftkanal, so dass insgesamt auch eine deutliche Verbesserung des Luftstroms im Luftkanal erreicht wird und dadurch insgesamt weniger Geräuschbelästigung. Im Weiteren ergeben sich durch den modulartigen Aufbau des Luftkanals und die modulartige Anbringung der Gepäckablageboxen an diesem verbesserte Möglichkeiten zur Anpassung an unterschiedliche Einbausituationen. Es ist dabei die erfindungsgemäße Anordnung auch einfach im Aufbau und einfach und flexibel in dem betreffenden Fahrzeug anbringbar.

Bei der bevorzugten Ausführungsform der vorliegenden Erfindung ist vorgesehen, dass der sich im Wesentlichen in Fahrzeuglängsrichtung erstreckende modulartig aufgebauchte Luftkanal einen im Wesentlichen flach ausgebildeten Querschnitt aufweist. Es kann dadurch die Bauhöhe der Gepäckablageboxen selbst erhöht werden, so dass der Fahrgast einen besseren Einblick in den Stauraum hat, dadurch besteht gegenüber den bekannten Systemen beispielsweise in Reisebussen ein deutlicher Vorteil. Durch den flach ausgebildeten Luftkanal und die Anbringung der Gepäckablageboxen in Fahrzeugquerrichtung ergibt sich außerdem für den Fahrgast ein erweiterter Blick nach außen hin.

Nach einem weiteren Merkmal der vorliegenden Erfindung ist vorgesehen, dass die Mittel zur Anbringung der Gepäckablagefächer im Wesentlichen als an dem Luftkanal angeordnetes Schienensystem ausgebildet sind. Über dieses Schienensystem ist die Position der einzelnen Gepäckablagefächer leicht veränderbar, durch diese Modularität des Deckensystems besteht die Möglichkeit, das System zu erweitern, je nach Luxuskategorie beispielsweise des Reisebusses. Hier ist z. B. denkbar, ähnlich wie im Flugzeug, in dem Reisebus 1. und 2. Klasse Bereiche vorzusehen. Durch die Befestigung der Gepäckablageboxen an einem Schienensystem ist es denkbar, die Ausstattung je nach Kundenwunsch auch nachträglich, den jeweiligen Anforderungen auszutauschen bzw. anzupassen. Die Position der Gepäckablageboxen ist der jeweiligen Sitzanordnung also leicht anzupassen, es muss dabei lediglich das Panel zwischen dem betreffenden Gepäckablageboxen zugeschnitten werden. Weiterhin ist durch das Schienensystem auch ein nachträglicher Ein- und Ausbau einzelner Gepäckablagefächer möglich, beispielsweise wenn der Kunde Sitzreihen nachträglich ausbauen möchte.

Es empfiehlt sich nach einem weiteren Merkmal der vorliegenden Erfindung, dass die Gepäckablageboxen einen modulartigen Aufbau aufweisen. Damit kann auch die Gepäckablagebox selbst den unterschiedlichen Einbausituationen bzw. Karosserien angepasst werden, sie kann dabei als kompakte Baueinheit mit mehr oder weniger Funktionen/Komfort ausgestattet sein.

Nach einem weiteren bevorzugten Ausgestaltungsmerkmal der vorliegenden Erfindung ist vorgesehen, dass die Gepäckablageboxen eine vorderseitige Klappe aufweisen. Dabei kann gemäß einer ersten Variante dieser Ausführungsform die vorderseitige Klappe der Gepäckablageboxen nach oben in deren Öffnungsstellung verschwenkbar ausgebildet sein, bei einer davon abweichenden zweiten Variante dieser Ausführungsform ist die vorderseitige Klappe der Gepäckablagebox nach unten in deren Öffnungsstellung verschwenkbar ausgebildet.

Bei einer von diesen Ausführungsformen abweichenden Ausführungsform der vorliegenden Erfindung ist vorgesehen, dass die Gepäckablageboxen vorderseitig offen, d. h. ohne Ausbildung einer Klappe, ausgebildet sind.

Es empfiehlt sich nach einem weiteren Merkmal der vorliegenden Erfindung, dass die Gepäckablageboxen wenigstens einen von einem Funktionsträgerelement abnehmbaren, kofferartigen Behälter umfassen. In diesem Fall ist gewünschtenfalls also eine Verwendung der Gepäckablageboxen als Koffer möglich.

Nach einem weiteren Merkmal der vorliegenden Erfindung ist vorgesehen, dass die Gepäckablageboxen 90° zum Fahrzeuggang hin drehbar ausgebildet sind. In diesem Fall können also die Gepäckablageboxen durch Drehung um 90° auch zu einer herkömmlichen Gepäckablage in aufgereihter Anordnung umfunktioniert werden.

Es empfiehlt sich nach einem weiteren Merkmal der vorliegenden Erfindung, dass die Gepäckablageboxen wenigstens ein Gepäcknetz aufweisen.

Nach einem weiteren Merkmal der vorliegenden Erfindung ist vorgesehen, dass die vorderseitige Klappe der Gepäckablageboxen manuell angetrieben ausgebildet ist, bei einer davon abweichenden Ausführungsform ist vorgesehen, dass die vorderseitige Klappe der Gepäckablageboxen motorisch angetrieben ausgebildet ist.

Es empfiehlt sich nach einem weiteren Merkmal der vorliegenden Erfindung, dass die Gepäckablageboxen abschließbar ausgebildet sind. Auf diese Weise ergibt sich eine erhöhte Sicherheit bzw. ein erhöhter Diebstahlschutz, da zwei zusammen reisende Fahrgäste ihr eigenes, abgeschlossenes und optional abzuschließendes Gepäckfach besitzen.

Bei einer weiteren aufgewerteten Ausführungsform des erfindungsgemäßen Deckensystems ist vorgesehen, dass die Gepäckablageboxen wenigstens einen vorderseitigen, vorzugsweise verstellbaren Monitor aufweisen. Dieser vorderseitige Monitor ist dabei vorzugsweise auf der vorderseitigen Klappe der Gepäckablagebox angeordnet.

Nach einem weiteren Merkmal der vorliegenden Erfindung ist vorgesehen, dass die Gepäckablageboxen an der Unterseite ein Service-Set mit Lüftungsdüsen und/oder Leseleuchten und/oder Stereo hi-fi Audio und/oder Lautsprecherregler und/oder Kopfhöreranschluss und/oder Rufknopf und/oder Radio- und TV-Steuerung und/oder ähnliche Bedienelemente umfassen. Es ist ein derartiges Service-Set an die jeweils gewünschte Kundeneinbausituation leicht anzupassen.

Nach einem weiteren Merkmal der vorliegenden Erfindung ist vorgesehen, dass der sich in Fahrzeuglängsrichtung erstreckende wenigstens eine Luftkanal zur Belüftung von der Mittelgangseite und/oder zur Belüftung von der Fensterseite ausgebildet ist. Auch diese Ausbildung kann gewünschtenfalls individuell variiert werden.

Zweckmäßig ist es nach einem weiteren Ausgestaltungsmerkmal der vorliegenden Erfindung, dass der sich in Fahrzeuglängsrichtung erstreckende wenigstens eine Luftkanal an der Mittelgangseite eine direkte/indirekte Tageslichtbeleuchtung aufweist.

Nach einem letzten Merkmal der vorliegenden Erfindung ist vorgesehen, dass die Bereiche des Luftkanals zwischen den Gepäckablageboxen beleuchtet ausgebildet sind. Es ergibt sich dadurch in diesem Bereich ein ambientes Licht, der entsprechende Bereich zwischen den Gepäckablageboxen kann dabei beispielsweise in unterschiedlichen Lichtfarben beleuchtet werden.

Die Erfindung ist in den Figuren der Zeichnung in mehreren Ausführungsbeispielen dargestellt. Es zeigen:
- Fig. 1: eine schematische, perspektivische Vorderansicht eines mit einem erfindungsgemäßen Deckensystem ausgestatteten Innenraums eines Großraumfahrzeugs,
- Fig. 2: eine schematische, perspektivische seitliche Ansicht ähnlich der in Fig. 1 mit teilweise auf den Sitzplätzen befindlichen Fahrgästen,
- Fig.3: eine schematische, perspektivische Unteransicht auf die oberhalb der Sitzplätze befindlichen Gepäckablageboxen des erfindungsgemäßen Deckensystems,
- Fig.4: eine schematische Seitenansicht eines Fahrzeuginnenraums mit erfindungsgemäßem Deckensystem mit teilweise auf den Sitzplätzen befindlichen Fahrgästen,
- Fig. 5: die Ansicht des Fahrzeuginnenraums mit erfindungsgemäßem Deckensystem gemäß Fig. 4 von schräg hinten gesehen,
- Fig. 6: eine schematische, perspektivische Unteransicht mehrerer Gepäckablageboxen mit schematisch angedeutetem Service-Set im Vordergrund,
- Fig. 7: eine schematische Rückansicht eines mit einem erfindungsgemäßen Deckensystem bestückten Fahrzeuginnenraums,
- Fig.8: eine schematische Vorderansicht eines Teils des erfindungsgemäßen Deckensystems,
- Fig. 9: eine schematische Unteransicht eines Teils des erfindungsgemäßen Deckensystems,
- Fig. 10: eine schematische Seitenansicht eines Teils des erfindungsgemäßen Deckensystems,
- Fig. 11: eine schematische Seitenansicht eines Teils des erfindungsgemäßen Deckensystems mit vorderseitiger Klappe in einer ersten Ausführungsform,
- Fig. 12: eine entsprechende Ansicht gemäß Fig. 11 mit Gepäckablagebox mit vorderseitiger Klappe in einer zweiten Ausführungsform,
- Fig. 13: die Ansicht gemäß Fig. 11 mit Gepäckablagebox mit vorderseitiger Klappe in einer dritten Ausführungsform,
- Fig. 14: eine schematische Vorderansicht eines mit einem erfindungsgemäßen Deckensystem bestückten Fahrzeuginnenraums in einer gegenüber der Fig. 7 abgewandelten Ausführungsform,
- Fig. 15: eine schematische, perspektivische Rückansicht auf einen Fahrzeuginnenraum mit erfindungsgemäßen Deckensystem in einer letzten Ausführungsform.

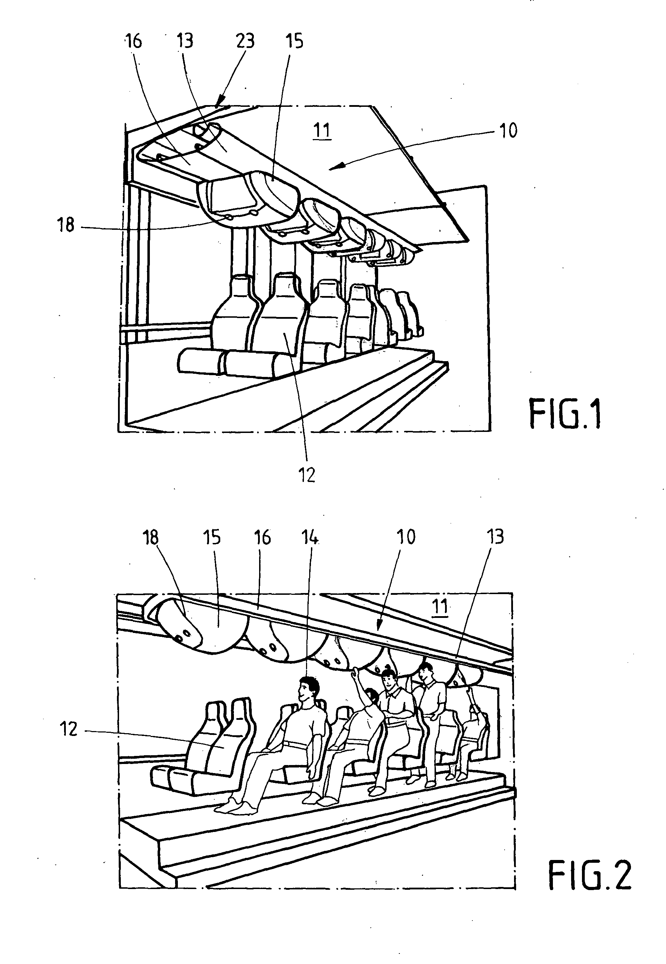

Das erfindungsgemäße Deckensystem für Großraumfahrzeuge oder -flugzeuge ist generell mit 10 bezeichnet. Das erfindungsgemäße Deckensystem 10 ist beispielsweise vorgesehen für Reisebusse, Schienenfahrzeuge, Passagierflugzeuge etc. Das Deckensystem 10 umfasst, siehe dazu beispielsweise zunächst die Fig. 1 der Zeichnung, ein im mit 11 bezeichneten Deckenbereich im Wesentlichen im Bereich oberhalb der Sitzplätze 12 angeordnetes Luftleit- und Deckenverkleidungssystem 13 sowie weiterhin ebenfalls in diesem Bereich angeordnete, für die Fahrzeuggäste 14 vom Fahrzeuginnenraum her zugängliche Gepäckablagefächer 15, siehe dazu auch zunächst die Fig. 2 der Zeichnung, in der einige Fahrgäste 14 schematisch dargestellt sind.

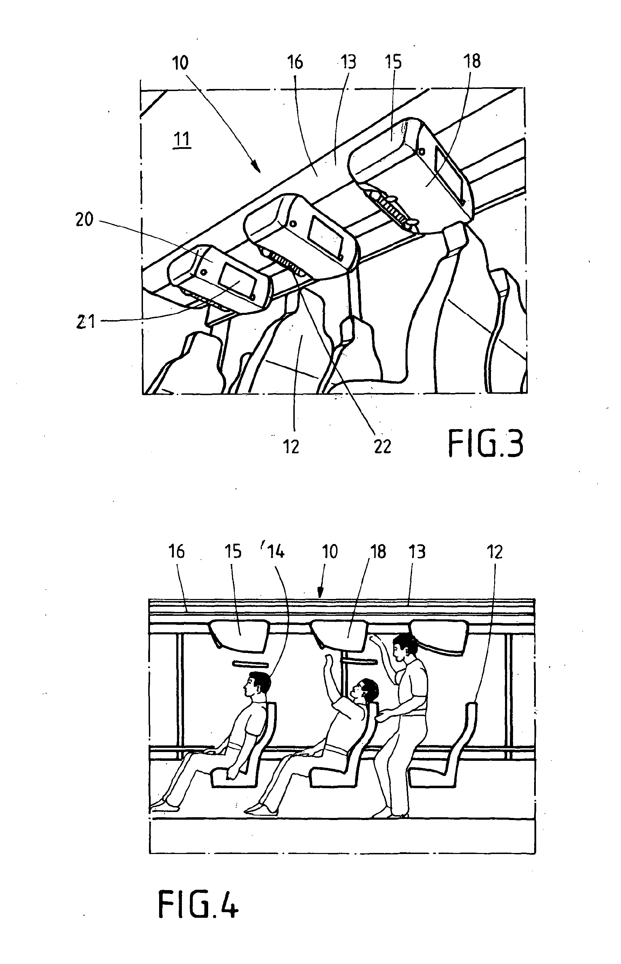

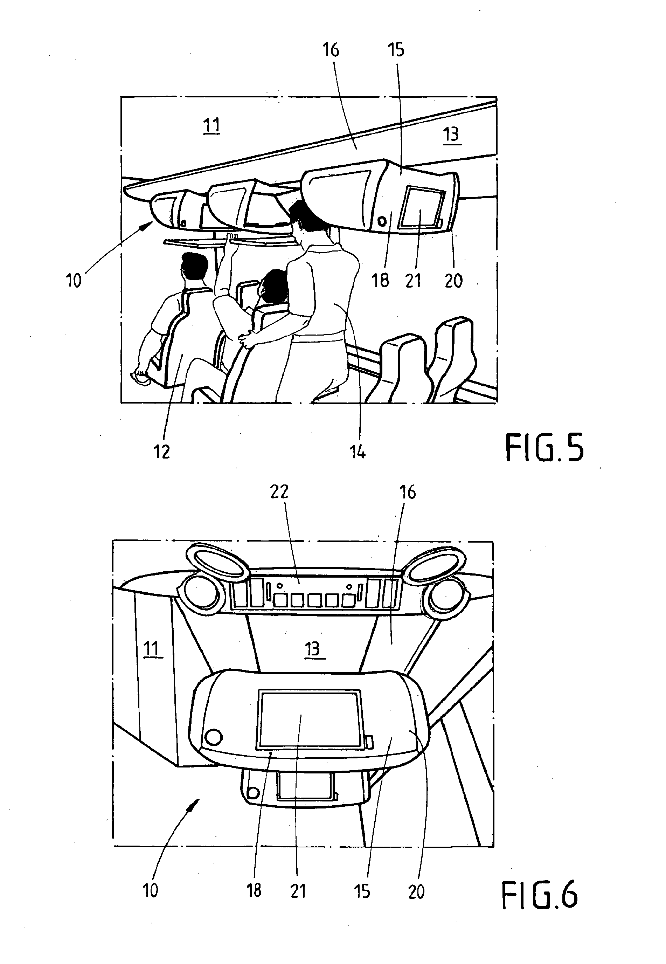

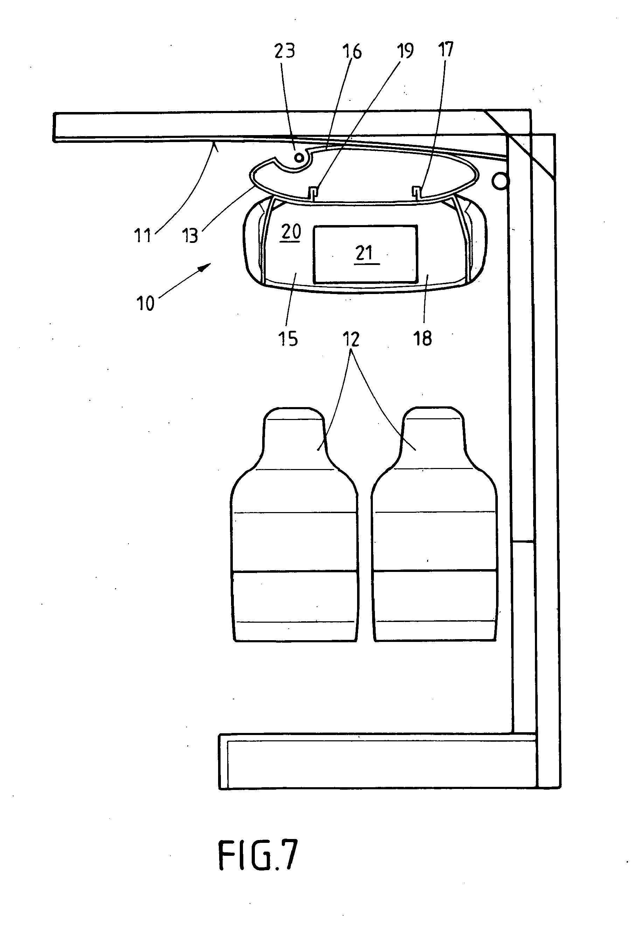

Gemäß der vorliegenden Erfindung ist nun vorgesehen, siehe dazu neben der Fig. 3 auch zunächst die Fig. 7 der Zeichnung, dass das Luftleit- und Deckenverkleidungssystem 13 wenigstens einen im Wesentlichen in Fahrzeuglängsrichtung sich erstreckenden, modulartig aufgebauten Luftkanal 16 mit im Wesentlichen gerade verlaufendem Querschnitt und mit Mitteln 17 zur Anbringung der Gepäckablagefächer 15 umfasst. Gemäß der vorliegenden Erfindung ist weiterhin vorgesehen, dass die Gepäckablagefächer 15 als an dem Luftkanal 16 modular anbringbare, sich in Normalposition in Fahrzeugquerrichtung erstreckende und von den Sitzplätzen 12 selbst her zugängliche Gepäckablageboxen 18 bestehen, siehe dazu beispielsweise auch die Fig. 5 der Zeichnung. Mit einem derart ausgebildeten erfindungsgemäßen Deckensystem 10 wird eine Zugänglichkeit des Gepäckraums wesentlich erleichtert und dadurch eine Erhöhung des Komforts und der Sicherheit für den Fahrgast erzielt, da durch die von den Sitzplätzen 12 selbst her zugängliche Anordnung der Gepäckablageboxen 18 erreicht wird, dass die Fahrgäste nicht mehr gestört werden, wenn jemand aufsteht um zum Mittelgang zu gehen, um etwas aus der Gepäckablagebox 18 zu holen bzw. hinein zu legen. Durch die erfindungsgemäße Anordnung der Gepäckablageboxen 18 wird insgesamt das Ein- und Aussteigen deutlich erleichtert und beschleunigt, da der Fahrgast sein Gepäck nicht mehr von der Gangmitte her entnimmt und es hierdurch zur Staubildung kommt (verbesserter Fahrgastfluss). Im Weiteren kommt es durch den gerade verlaufenden Querschnitt des Luftkanals 16 nicht mehr zu Strömungsunterbrechungen in diesem Luftkanal, so dass hier auch keine Turbulenzen entstehen und dadurch eine geringere Geräuschbelästigung erzielt wird. Im Weiteren wird durch die modulartige Ausbildung des Luftkanals 16 und die modulartige Anbringung der Gepäckablageboxen 18 an diesen Luftkanal 16 eine wesentlich verbesserte Anpassbarkeit an unterschiedliche Einbausituationen erreicht.

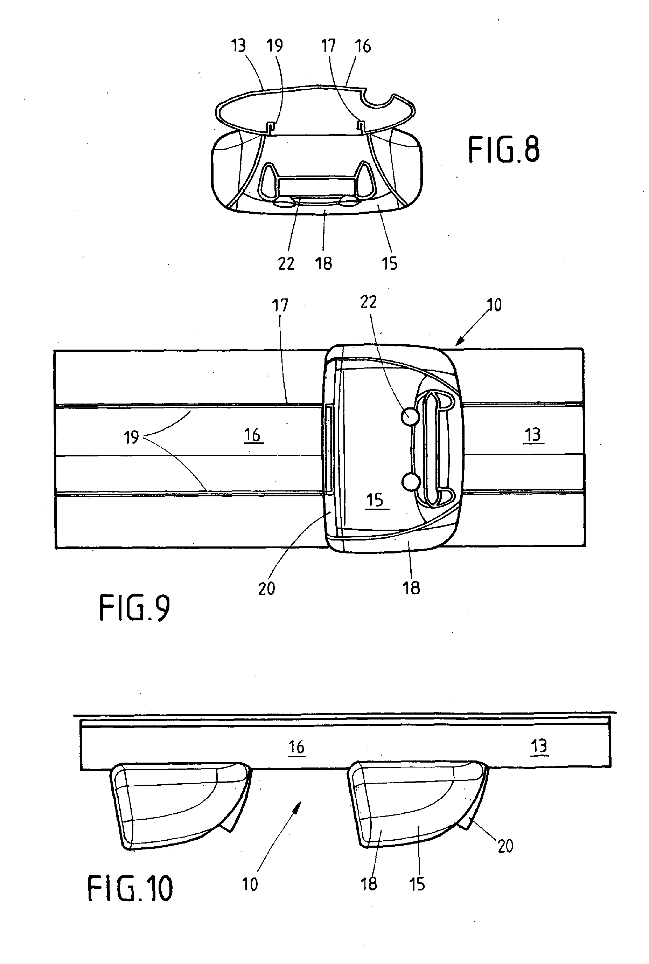

Der sich im Wesentlichen in Fahrzeuglängsrichtung erstreckende, modulartig aufgebaute Luftkanal 16 weist bei den dargestellten Ausführungsbeispielen des erfindungsgemäßen Deckensystems 10 einen im Wesentlichen flach ausgebildeten Querschnitt auf, siehe dazu neben der Fig. 7 auch die Fig. 8 der Zeichnung. Durch einen solch flach ausgebildeten Querschnitt des Luftkanals 16 kann die Höhe der Gepäckablageboxen 18 vergrößert werden, so dass der Fahrgast 14 einen besseren Einblick in den Stauraum hat, siehe dazu beispielsweise die Fig. 5 der Zeichnung. Dieses ist gegenüber den bisher bekannten Systemen beispielsweise bei Reisebussen von erheblichem Vorteil. Im Weiteren hat der Fahrgast 14 aufgrund des flach ausgebildeten Luftkanals 16 und der in Querrichtung angeordneten Gepäckablageboxen 18 einen erweiterten Blick nach außen, siehe dazu beispielsweise die Fig. 4 der Zeichnung.

Die Mittel 17 zur Anbringung der Gepäckablagefächer 15 sind bei den dargestellten Ausführungsbeispielen des erfindungsgemäßen Deckensystems 10 im Wesentlichen als an dem Luftkanal 16 angeordneten Schienensystem 19 ausgebildet, siehe dazu die Fig. 9 in Verbindung mit der Fig. 10 der Zeichnung. Dieses Schienensystem 19, das beispielsweise als C-Schiene sowie ggf. auch als Bestandteil des Luftkanals 16 ausgebildet sein kann, dient zur einfachen, schnellen und sicheren Montage der Gepäckablageboxen 18. Es ist dabei die Position der jeweiligen Gepäckablagebox 18 über dieses Schienensystem 19 leicht veränderbar, so dass die Position dieser Gepäckablageboxen 18 der jeweiligen Sitzanordnung im Bus leicht anzupassen ist. Es muss dabei lediglich das zwischen den Gepäckablageboxen 18 befindliche Teilstück auf dem Luftkanal 16 zugeschnitten werden. Mit diesem Schienensystem 19 ist auch ein nachträglicher Ein- und Ausbau einzelner Gepäckablageboxen 18 möglich, z. B. wenn der Kunde Sitzreihen nachträglich ausbauen möchte.

Die Gepäckablageboxen 18 des erfindungsgemäßen Deckensystems 10 weisen einen modulartigen Aufbau auf, es kann dadurch auch bzgl. der Gepäckablageboxen 18 selbst eine einfache Anpassung an unterschiedliche Einbausituationen vorgenommen werden, sie können dabei als kompakte Baueinheiten mit mehr oder weniger Funktionen/Komfort ausgestattet sein. Weiterhin können diese kompakten Baueinheiten in jeder vom Kunden gewünschten Farbe geliefert werden.

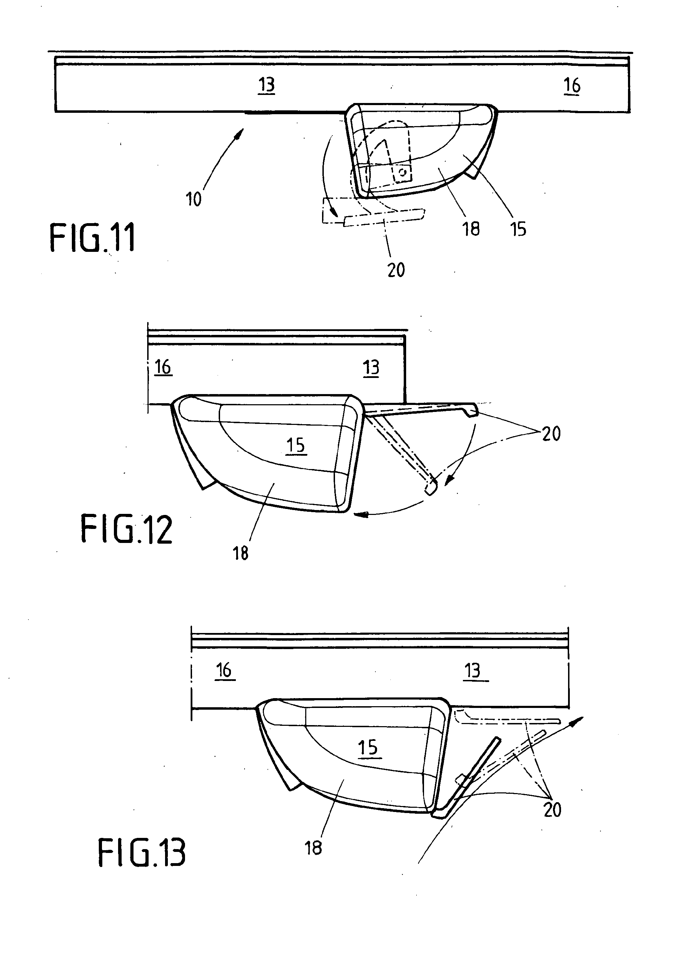

Bei den in den Figuren der Zeichnung dargestellten Ausführungsbeispielen des erfindungsgemäßen Deckensystems 10 weisen die Gepäckablageboxen 18 eine vorderseitige Klappe 20 auf, siehe dazu insbesondere die Figuren 11, 12 und 13 der Zeichnung. Bei den in den Figuren 12 und 13 dargestellten Ausführungsbeispielen ist die vorderseitige Klappe 20 der Gepäckablageboxen 18 nach oben in deren Öffnungsstellung verschwenkbar ausgebildet, es wird dabei bei dem Ausführungsbeispiel gemäß der Fig. 12 die vorderseitige Klappe 20 in einfacher Weise nach oben verschwenkt, während bei dem in der Fig. 13 der Zeichnung dargestellten Ausführungsbeispiel die vorderseitige Klappe 20 um eine Schwenkeinrichtung in rückwärtiger Richtung nach oben verschwenkt wird. Gegenüber diesen beiden Ausführungsformen des erfindungsgemäßen Deckensystems 10 ist bei der Ausführungsform gemäß der Fig. 11 der Zeichnung die vorderseitige Klappe 20 der Gepäckablageboxen 18 nach unten in deren Öffnungsstellung verschwenkbar, die dafür verwendete Verschwenkeinrichtung kann einen an sich bekannten Aufbau aufweisen. In Abweichung von den in den Figuren 11, 12, und 13 dargestellten Ausführungsformen des erfindungsgemäßen Deckensystems 10 ist es auch möglich, dass die Gepäckablageboxen 18 vorderseitig offen, d. h. ohne Ausbildung einer Klappe, ausgebildet sind. Diese Ausführungsform ist in den Figuren der Zeichnung nicht dargestellt.

Bei einem in den Figuren der Zeichnung nicht dargestellten Ausführungsbeispiel des erfindungsgemäßen Systems 10 können die Gepäckablageboxen 18 wenigstens einen von einem Funktionsträgerelement abnehmbaren kofferartigen Behälter umfassen. Dieser kann bei Bedarf von dem erwähnten Funktionsträgerelement abgenommen und als Koffer verwendet werden. Es ist weiterhin denkbar, dass die Gepäckablageboxen 18 des erfindungsgemäßen Deckensystems um 90° zum Fahrzeuggang hin drehbar ausgebildet sind, so dass die Gepäckablageboxen 18 nach dieser 90°-Drehung wieder zu einer herkömmlichen Gepäckablage mit aufgereihten Gepäckablagefächern werden. In Abweichung davon ist es auch möglich, dass die Gepäckablageboxen 18 um 180° drehbar ausgebildet sind, so dass die Gepäckablageboxen 18 für eine umgekehrte Sitzreihe mit Blick entgegen der Fahrtrichtung verwendet werden können.

Die Gepäckablageboxen 18 des erfindungsgemäßen Deckensystems 10 können in nicht dargestellter Weise wenigstens ein Gepäcknetz aufweisen. Weiterhin können die vorderseitigen Klappen 20 der Gepäckablageboxen 18, siehe beispielsweise wieder eine der Figuren 11, 12 oder 13 der Zeichnung, manuell angetrieben ausgebildet sein, oder es können diese vorderseitigen Klappen 20 auch motorisch angetrieben ausgebildet sein.

Die Gepäckablageboxen 18, wie sie beispielsweise in der Fig. 5 der Zeichnung dargestellt sind, können abschließbar ausgebildet sein. Eine solche Ausführungsform ist hinsichtlich einer Sicherheit und eines Diebstahlschutzes vorteilhaft. In diesem Fall haben zwei zusammenreisende Fahrgäste 14 ihr eigenes, abgeschlossenes optional abzuschließendes Gepäckfach.

Bei dem in den Figuren der Zeichnung dargestellten aufgewerteten Ausführungsbeispiel des erfindungsgemäßen Deckensystems 10 weisen, siehe insbesondere die Fig. 6 der Zeichnung, die Gepäckablageboxen 18 wenigstens einen vorderseitigen, vorzugsweise verstellbaren Monitor 21 auf, wobei bei den dargestellten Ausführungsbeispielen dieser vorderseitige Monitor 21 auf der vorderseitigen Klappe 20 der Gepäckablagebox 18 angeordnet ist, siehe auch die Fig. 5 der Zeichnung.

Bei dem in den Figuren der Zeichnung dargestellten Ausführungsbeispiel des erfindungsgemäßen Deckensystems 10 umfassen, siehe dazu insbesondere die Fig. 6 der Zeichnung, die Gepäckablageboxen 18 an der Unterseite ein Service-Set 22 mit Lüftungsdüsen und/oder Leseleuchten und/oder Stereo hi-fi Audio und/oder Lautsprecherregler und/oder Kopfhöreranschluss und/oder Rufknopf und/oder Radio- und TV-Steuerung und/oder ähnliche Bedien- oder Funktionselemente auf. Es sind dazu in der Fig. 6 der Zeichnung einige dieser Bedien- bzw. Funktionselemente schematisch und nicht mit Bezugszeichen versehen dargestellt.

Der sich in Fahrzeuglängsrichtung erstreckende wenigstens eine Luftkanal 16 kann in Abhängigkeit von der gewünschten Einbausituation zur Belüftung von der Mittelgangseite und/oder zur Belüftung von der Fensterseite ausgebildet sein.

Der sich in Fahrzeuglängsrichtung erstreckende Luftkanal 16 weist weiterhin bei den dargestellten Ausführungsformen z. B. gemäß den Figuren 1 und 7 der Zeichnung an der Mittelgangseite eine indirekte Tageslichtbeleuchtung 23 auf, die durch eine in einer dafür an der Außenseite des Luftkanals 16 vorgesehenen Aufnahme befindlichen nicht bezeichneten Leuchteinrichtung verwirklicht ist. Alternativ dazu kann hier aber auch eine direkte Tageslichtbeleuchtung vorgesehen werden.

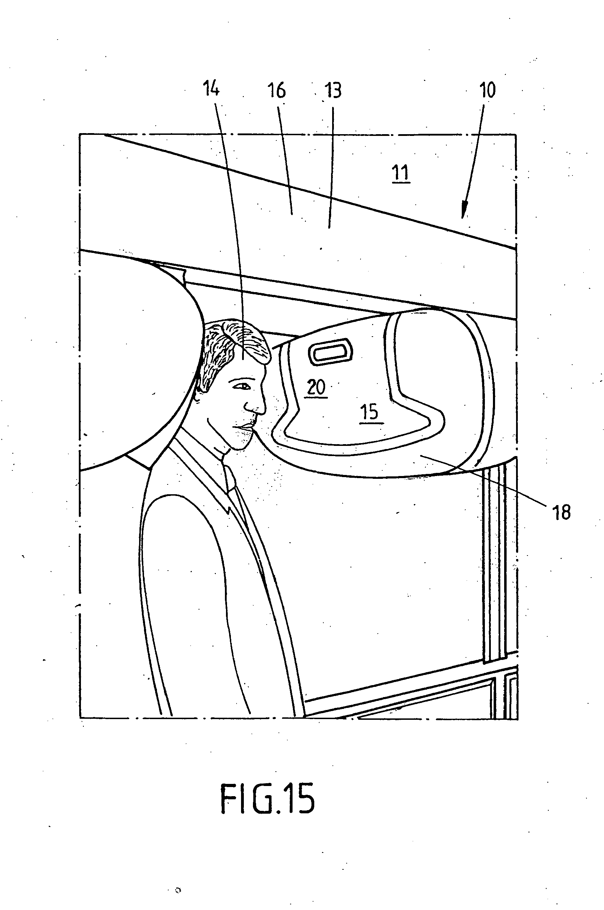

Bei dem Ausführungsbeispiel des erfindungsgemäßen Deckensystems 10 gemäß der Fig. 15 der Zeichnung sind die Bereiche des Luftkanals 16 zwischen den Gepäckablageboxen 18 beleuchtet ausgebildet. In diesem Bereich ergibt sich dann ein ambientes Licht, wobei dieser Bereich in unterschiedlichen Lichtfarben beleuchtet werden kann. Alternativ dazu ist es aber auch denkbar, diesen Bereich für eine direkte Tageslichteinstrahlung oder für eine Hellbeleuchtung zu verwenden.

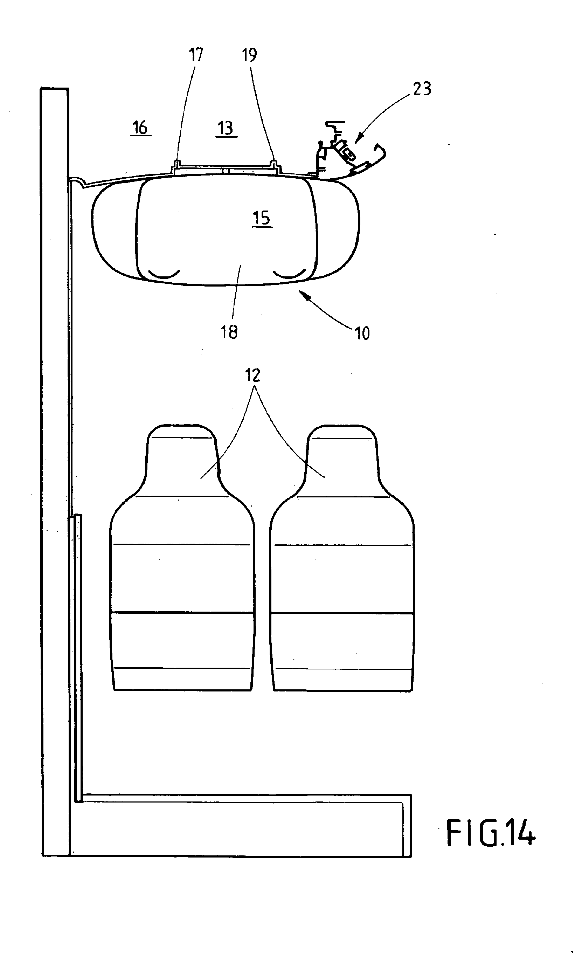

In der Fig. 14 der Zeichnung ist eine abgewandelte Ausführungsform eines erfindungsgemäßen Deckensystems 10 mit leicht geändertem Luftleit- und Deckenverkleidungssystem 13 dargestellt. Mit dieser Zeichnungsfigur soll auch insbesondere der modulartige Aufbau der gesamten Anordnung und der damit verbundenen Anpassbarkeit an unterschiedliche Einbausituationen verdeutlicht werden. Das erfindungsgemäße Deckensystem 10 kann dabei in ansonsten üblicher Weise auch mit weiteren Bauelementen wie Dachverkleidungen, wahlweise mit Textilen, zur Verkleidung des Dachhimmelbereichs zwischen den Gepäckablageboxen 18, beziehbar, weiteren Luftleitkanälen, Rollos, Vorhängen und anderen Innenausstattungselementen zusammen wirken. Weiterhin denkbar ist auch, die Gepäckablageboxen 18 mit zusätzlichen Funktionselementen wie Luftzuführung, Beleuchtungseinrichtungen etc. zu bestücken.

Mit dem erfindungsgemäßen Deckensystem 10 werden gegenüber den bekannten Ausführungsformen insbesondere bzgl. der Zugänglichkeit des Gepäckraums sowie auch hinsichtlich einer Verbesserung des Luftstroms und eine Verbesserung der Anpassbarkeit an unterschiedliche Einbausituationen deutliche Vorteile erzielt. So bestehen auch insbesondere gute Möglichkeiten einer nachträglichen Änderung der gesamten Anordnung, wenn beispielsweise der Kunde weitere Sitzreihen nachträglich einbauen möchte. Im Weiteren ist durch die gerade verlaufende Ausbildung des Luftkanals 16 auch eine großzügigere Dimensionierung desselben möglich.

Wie bereits erwähnt, sind die dargestellten Ausführungsformen nur beispielsweise Verwirklichungen der Erfindung. Diese ist nicht darauf beschränkt, es sind vielmehr noch mancherlei Abänderungen und Ausbildungen möglich. So sind insbesondere Abwandlungen in der konstruktiven Ausbildung der Luftkanäle 16 und der Gepäckablageboxen 18 möglich. Weiterhin denkbar ist selbstverständlich auch eine Anbringung des erfindungsgemäßen Deckensystems 10 in anderen Arten von Sitzkonfigurationen als in den Figuren der Zeichnung dargestellt.

### Bezugszeichenliste:

- 10: Deckensystem
- 11: Deckenbereich
- 12: Sitzplatz
- 13: Luftleit- und Deckenverkleidungssystem
- 14: Fahrgast
- 15: Gepäckablagefach
- 16: Luftkanal (von 13)
- 17: Mittel zur Anbringung von 15 an 16
- 18: Gepäckablagebox
- 19: Schienensystem (an 16 für 15)
- 20: vorderseitige Klappe (an 18)
- 21: Monitor (an 18 bzw. 20)
- 22: Service-Set (an 18)
- 23: indirekte Tageslichtbeleuchtung (an 16)

## Patentansprüche

1. Deckensystem (10) für Großraumfahrzeuge oder -flugzeuge, wie z. B. für Reisebusse, Schienenfahrzeuge, Passagierflugzeuge etc., mit im Deckenbereich (11) im Wesentlichen im Bereich oberhalb der Sitzplätze (12) angeordnetem Luftleit- und Deckenverkleidungssystem (13) und ebenfalls in diesem Bereich angeordneten, für die Fahrgäste (14) vom Fahrzeuginnenraum her zugänglichen Gepäckablagefächern (15), **dadurch gekennzeichnet, dass** das Luftleit- und Deckenverkleidungssystem (13) wenigstens einen im Wesentlichen in Fahrzeuglängsrichtung sich erstreckenden, modulartig aufgebauten Luftkanal (16) mit im Wesentlichen gerade verlaufendem Querschnitt und mit Mitteln (17) zur Anbringung der Gepäckablagefächer (15) umfasst, und dass die Gepäckablagefächer (15) als an dem Luftkanal (16) modulartig anbringbare, sich in Normalposition in Fahrzeugquerrichtung erstreckende und von den Sitzplätzen (12) selbst her zugänglichen Gepäckablageboxen (18) bestehen.

2. Deckensystem nach Anspruch 1, **dadurch gekennzeichnet, dass** der sich im Wesentlichen in Fahrzeuglängsrichtung erstreckende, modulartig aufgebaute Luftkanal (16) einen im Wesentlichen flach ausgebildeten Querschnitt aufweist.

3. Deckensystem nach Anspruch 1 oder 2, **dadurch gekennzeichnet, dass** die Mittel (17) zur Anbringung der Gepäckablagefächer (15) im Wesentlichen als an dem Luftkanal (16) angeordnetes Schienensystem (19) ausgebildet sind.

4. Deckensystem nach einem der Ansprüche 1 bis 3, **dadurch gekennzeichnet, dass** die Gepäckablageboxen (18) einen modulartigen Aufbau aufweisen.

5. Deckensystem nach Anspruch 4, **dadurch gekennzeichnet, dass** die Gepäckablageboxen (18) eine vorderseitige Klappe (20) aufweisen.

6. Deckensystem nach Anspruch 5, **dadurch gekennzeichnet, dass** die vorderseitige Klappe (20) der Gepäckablageboxen (18) nach oben in deren Öffnungsstellung verschwenkbar ausgebildet ist.

7. Deckensystem nach Anspruch 5, **dadurch gekennzeichnet, dass** die vorderseitige Klappe (20) der Gepäckablageboxen (18) nach unten in deren Öffnungsstellung verschwenkbar ausgebildet ist.

8. Deckensystem nach Anspruch 4, **dadurch gekennzeichnet, dass** die Gepäckablageboxen (18) vorderseitig offen, d. h. ohne Ausbildung einer Klappe, ausgebildet sind.

9. Deckensystem nach einem der Ansprüche 1 bis 8, **dadurch gekennzeichnet, dass** die Gepäckablageboxen (18) wenigstens einen von einem Funktionsträgerelement abnehmbaren kofferartigen Behälter umfassen.

10. Deckensystem nach einem der Ansprüche 1 bis 9, **dadurch gekennzeichnet, dass** die Gepäckablageboxen (18) um 90 ° zum Fahrzeuggang hin drehbar ausgebildet sind.

11. Deckensystem nach einem der Ansprüche 1 bis 10, **dadurch gekennzeichnet, dass** die Gepäckablageboxen (18) wenigstens ein Gepäcknetz aufweisen.

12. Deckensystem nach einem der Ansprüche 5 bis 11, **dadurch gekennzeichnet, dass** die vorderseitige Klappe (20) der Gepäckablageboxen (18) manuell angetrieben ausgebildet ist.

13. Deckensystem nach einem der Ansprüche 5 bis 11, **dadurch gekennzeichnet, dass** die vorderseitige Klappe (20) der Gepäckablageboxen (18) motorisch angetrieben ausgebildet ist.

14. Deckensystem nach einem der Ansprüche 1 bis 13, **dadurch gekennzeichnet, dass** die Gepäckablageboxen (18) abschließbar ausgebildet sind.

15. Deckensystem nach einem der Ansprüche 1 bis 14, **dadurch gekennzeichnet, dass** die Gepäckablageboxen (18) wenigstens einen vorderseitigen, vorzugsweise verstellbaren Monitor (21) aufweisen.

16. Deckensystem nach Anspruch 15, **dadurch gekennzeichnet, dass** der vorderseitige Monitor (21) auf der vorderseitigen Klappe (20) der Gepäckablagebox (18) angeordnet ist.

17. Deckensystem nach einem der Ansprüche 1 bis 16, **dadurch gekennzeichnet, dass** die Gepäckablageboxen (18) an der Unterseite ein Service-Set (22) mit Lüftungsdüsen und/oder Leseleuchten und/oder Stereo hi-fi Audio und/oder Lautsprecherregler und/oder Kopfhöreranschluss und/oder Rufknopf und/oder Radio- und TV-Steuerung und/oder ähnliche Bedienelemente umfassen.

18. Deckensystem nach einem der Ansprüche 1 bis 17, **dadurch gekennzeichnet, dass** der sich in Fahrzeuglängsrichtung erstreckende, wenigstens eine Luftkanal (16) zur Belüftung von der Mittelgangseite und/oder zur Belüftung von der Fensterseite ausgebildet ist.

19. Deckensystem nach einem der Ansprüche 1 bis 18, **dadurch gekennzeichnet, dass** der sich in Fahrzeuglängsrichtung erstreckende, wenigstens eine Luftkanal (16) an der Mittelgangseite eine direkte/indirekte Tageslichtbeleuchtung (23) aufweist.

20. Deckensystem nach einem der Ansprüche 1 bis 19, **dadurch gekennzeichnet, dass** die Bereiche des Luftkanals (16) zwischen den Gepäckablageboxen (18) beleuchtet ausgebildet sind.
